# EUROPEAN PATENT SPECIFICATION

(11) **EP 3 231 336 B1**
(45) Date of publication and mention of the grant of the patent: **14.11.2018**
(21) Application number: 17153344.1
(22) Date of filing: 26.01.2017
(51) Int. Cl.: A47J 31/10, A47J 31/41

(54) **BREWING DEVICE FOR COFFEE MACHINE**
BRAUVORRICHTUNG FÜR KAFFEEMASCHINE
DISPOSITIF D'INFUSION POUR MACHINE À CAFÉ

(30) Priority: 11.04.2016 CN 201620297012 U
(43) Date of publication of application: 18.10.2017
(73) Proprietor: Oceanrich Enterprise Co., Ltd., Shenzhen 518101 (CN)
(72) Inventor: OU, JIH-I, Shenzhen, 518101 (CN)
(74) Representative: Sun, Yiming

(56) References cited:
- WO-A1-98/58577
- DE-A1- 2 121 322
- DE-U1- 29 501 228
- FR-A1- 2 960 407

## Description

### FIELD OF THE INVENTION

The present invention relates to brewing devices, and more particularly to a brewing device for a coffee machine.

### BACKGROUND OF THE INVENTION

Brewing device for a coffee machine is used for brewing coffee powder so as to extract the coffee. When an existing brewing device is used to brew coffee, external liquid flows directly onto the coffee powder, thus it is unable to extract the coffee evenly from the coffee powder.

WO 1998/058577 A1 discloses an electrical appliance for the preparation of infusions, for instance, a coffee maker, which is provided with a water reservoir which can hold water and which comprises a heating element with which the water can be heated and a pot for containing the infusion and which can be placed under the water reservoir, the bottom of the water reservoir being provided with a valve which opens when the water is heated to boiling temperature. The water reservoir is a separate unit which can be removed from the top of the appliance for the preparation of infusions, and replaced again.

### SUMMARY OF THE INVENTION

An objective of the present invention is to provide a brewing device for a coffee machine, which can extract the coffee evenly from the coffee powder, so as to solve the defects of the prior art.

To solve the above problem, there are provided following technical solutions:
A brewing device for a coffee machine includes: a base provided for supporting a coffee cup and a support arm provided on an upper surface of the base and perpendicular to the base, the support arm is provided with a cavity, a sleeve extending from a side wall of a top of the support arm is provided for fixing a liquid container, and a support frame extending from a side wall of a middle of the support arm is provided for supporting a mixing cup. The support arm is provided with a driver unit arranged therein for driving the liquid container to rotate so that the liquid in the liquid container is able to rotate and flow into the mixing cup to brew coffee powder and then flow into the coffee cup.

In accordance with the invention the driver unit comprises a rotation ring sleeved on the liquid container, a bearing sleeved on the rotation ring for supporting the rotation ring and a motor provided in the cavity of the support arm, the rotation ring being attached to a rotation shaft of the motor via a transmission belt.

In a preferred embodiment, a plurality of first liquid outlets are provided on the liquid container at an off-center position.

In a preferred embodiment, the liquid container is sleeved with an adjustment ring for adjusting the first liquid outlets to be closed.

In a preferred embodiment, a second liquid outlet is provided at a bottom of the mixing cup.

In a preferred embodiment, a filter screen is provided between the mixing cup and the coffee cup.

In a preferred embodiment, a thermometer is provided in the liquid container.

In a preferred embodiment, the coffee cup is sleeved with a heatproof ring.

In a preferred embodiment, a battery is provided in the cavity of the support arm for supplying power to the driver unit.

In a preferred embodiment, a USB interface is provided on a side wall of the support arm for charging the battery.

Compared with the prior art, the present invention has following beneficial effects: the present invention is provided with a driver unit for driving the liquid container to rotate along the sleeve, so that the liquid in the liquid container is able to rotate and flow into the mixing cup to brew coffee powder evenly and thoroughly for full extraction of the coffee.

The present invention will become clearer by means of the following description combining the accompanying drawings, which are used to illustrate embodiments of the present invention.

### BRIEF DESCRIPTION OF THE DRAWINGS

FIG. 1 is a perspective view of the brewing device for a coffee machine according to an embodiment of the present invention;
FIG. 2 is a section view of the brewing device for a coffee machine according to an embodiment of the present invention; and
FIG. 3 is an exploded view of the brewing device for a coffee machine according to an embodiment of the present invention.

### DETAILED DESCRIPTION OF ILLUSTRATED EMBODIMENTS

For understanding the technical content of the present invention more sufficiently, some embodiments of the present invention will be described as follows, by way of example only, with reference to the accompanying drawings.

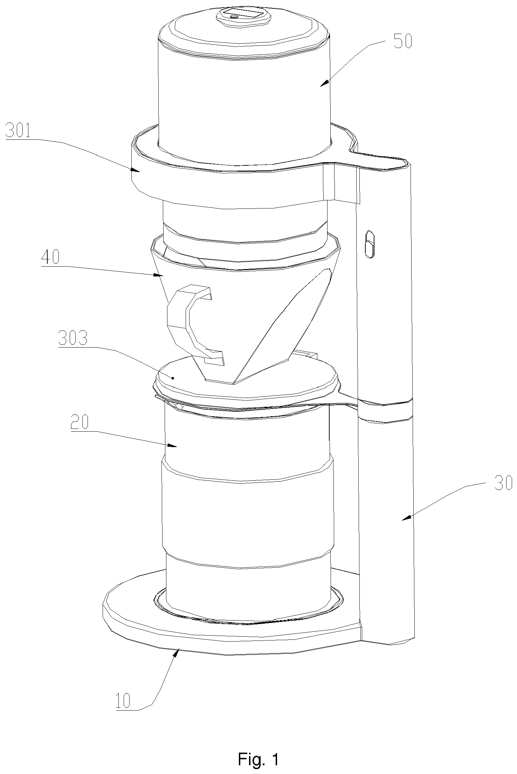

As shown in FIG. 1 to FIG. 3, the brewing device for a coffee machine includes a base 10, which is provided for supporting a coffee cup 20. A support arm 30 is provided on an upper surface of the base 10 and perpendicular to the base 10. The support arm 30 is provided with a cavity. A sleeve 301 extending from a side wall of a top of the support arm 30 is provided for fixing a liquid container 50; and a support frame 303 extending from a side wall of a middle of the support arm 30 is provided for supporting a mixing cup 40. The liquid container 50 is provided for containing liquid and the liquid container 50 is provided with a plurality of first liquid outlets 501 at a bottom thereof. The mixing cup 40 is provided for containing coffee powder and the coffee cup 20 is provided for containing the extracted solution. The liquid container 50 and the mixing cup 40 are both supported by the support arm 30. The liquid container 50, the mixing cup 40 and the coffee cup 20 are arranged in the same vertical plane. The support arm 30 is provided with a driver unit 70 arranged therein for driving the liquid container 50 to rotate. The liquid container 50 is driven, by the driven unit 70, to rotate so that the liquid in the liquid container 50 is able to rotate and flow into the mixing cup 40 to brew coffee powder and then flow into the coffee cup 20.

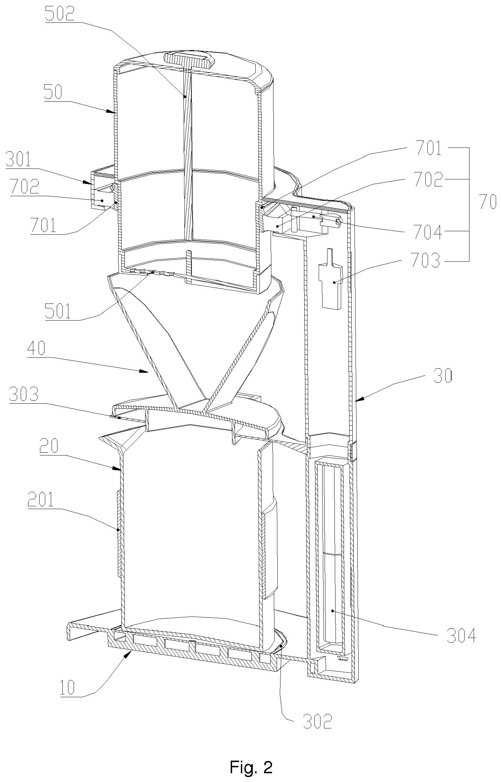

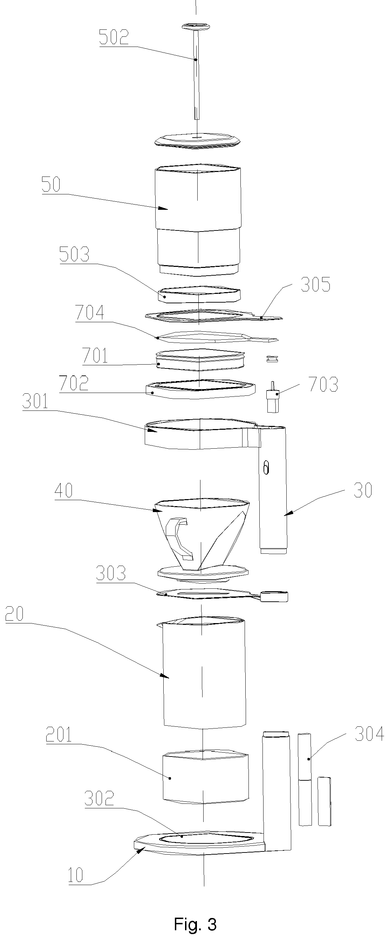

As shown in FIG. 2 and FIG. 3, the driver unit 70 includes a rotation ring 701 sleeved on the liquid container 50, a bearing 702 sleeved on the rotation ring 701 for supporting the rotation ring 701 and a motor 703 provided in the cavity of the support arm 30. The rotation ring 701 is attached to a rotation shaft of the motor 703 via a transmission belt 704.

In this embodiment, a cover 305 with hollow structure is fixed on a top of the sleeve 301; the liquid container 50 runs through the cover 305 and is arranged inside the sleeve 301. A fixing ring 302 is provided on the upper surface of the base 10 for fixing the coffee cup 20. The liquid container 50 has a plurality of first liquid outlets 501 provided thereon at an off-center position. The liquid container 50 is further sleeved with an adjustment ring 503 for adjusting the first liquid outlets 501 to be closed. The amount of the fluid flowing into the mixing cup is able to be regulated by closing the liquid outlets 501, thereby controlling the brewing and extracting time. The mixing cup 40 has a second liquid outlet (not shown in the figures) provided at a bottom thereof. A filter screen (not shown in the figures) is provided between the mixing cup 40 and the coffee cup 20; and a thermometer 502 is provided in the liquid container 50. The coffee cup 20 is sleeved with a heatproof ring 201. A battery 304 is provided in the cavity of the support arm 30 for supplying power to the driver unit 70; and a charging interface is provided on a side wall of the support arm 304 and connected to the battery. In this embodiment, the charging interface is a USB interface.

The coffee powder is placed in the mixing cup 40; and the liquid container 50 containing liquid is placed in the sleeve 301. The liquid contained in the liquid container 50 is water. When using, the motor 703 is started up, the rotation ring 701 is driven by the motor 703 to rotate, in turn, the liquid container 50 is driven to rotate with the rotation ring 701, and then the liquid in the liquid container is able to rotate and flow into the mixing cup 40 via the first liquid outlets 501 so as to brew the coffee powder and then the extracted liquid will finally flow into the coffee cup 20. The filter screen arranged at the bottom of the mixing cup 40 is provided to prevent the solid particle from entering into the coffee cup 20. The thermometer 502 disposed in the liquid container 50 is provided to measure the temperature of the liquid contained in the liquid container 50.

Above descriptions of embodiments are provided for further illustrating the technical content of the present invention, so as to facilitate understanding and it should be understood that the invention is not to be limited to the disclosed embodiments. Any technique extension and recreation according to the present invention should be included within the scope of protection of the invention.

## Claims

1. A brewing device for a coffee machine, comprising a base (10) provided for supporting a coffee cup (20) and a support arm (30) provided on an upper surface of the base and perpendicular to the base, wherein the support arm is provided with a cavity, a sleeve (301) extending from a side wall of a top of the support arm is provided for fixing a liquid container (50), and a support frame (303) extending from a side wall of a middle of the support arm is provided for supporting a mixing cup (40); **characterized in that**:
the support arm is provided with a driver unit (70) arranged therein for driving the liquid container to rotate so that the liquid in the liquid container is able to rotate and flow into the mixing cup to brew coffee powder and then flow into the coffee cup, and
the driver unit comprises a rotation ring (701) sleeved on the liquid container, a bearing (702) sleeved on the rotation ring for supporting the rotation ring and a motor (703) provided in the cavity of the support arm, the rotation ring being attached to a rotation shaft of the motor via a transmission belt (704).

2. The brewing device for a coffee machine according to claim 1, wherein a plurality of first liquid outlets (501) are provided on the liquid container at an off-center position.

3. The brewing device for a coffee machine according to claim 2, wherein the liquid container is sleeved with an adjustment ring (503) for adjusting the first liquid outlets to be closed.

4. The brewing device for a coffee machine according to claim 1, wherein a second liquid outlet is provided at a bottom of the mixing cup.

5. The brewing device for a coffee machine according to claim 1, wherein a filter screen is provided between the mixing cup and the coffee cup.

6. The brewing device for a coffee machine according to claim 1, wherein a thermometer (502) is provided in the liquid container.

7. The brewing device for a coffee machine according to claim 1, wherein the coffee cup is sleeved with a heatproof ring (201).

8. The brewing device for a coffee machine according to claim 1, wherein a battery (304) is provided in the cavity of the support arm for supplying power to the driver unit.

9. The brewing device for a coffee machine according to claim 8, wherein a USB interface is provided on a side wall of the support arm for charging the battery.

## Patentansprüche

1. Brühvorrichtung für eine Kaffeemaschine, die eine Basis (10), die zum Halten einer Kaffeetasse (20) bereitgestellt ist und einen Stützarm (30), der senkrecht zur Basis auf einer oberen Fläche der Basis bereitgestellt ist, umfasst, wobei der Stützarm mit einem Hohlraum bereitgestellt ist, wobei eine Manschette (301), die sich von einer Seitenwand einer Oberseite des Stützarms erstreckt, zum Befestigen eines Flüssigkeitsbehälters (50) bereitgestellt ist, und ein Stützrahmen (303), der sich von einer Seitenwand einer Mitte des Stützarms erstreckt, zum Stützen eines Mischbechers (40) bereitgestellt ist; **dadurch gekennzeichnet, dass**:
der Stützarm mit einer Antriebseinheit (70) bereitgestellt ist, die darin angeordnet ist, um den Flüssigkeitsbehälter in Drehung zu versetzen, sodass sich die Flüssigkeit in dem Flüssigkeitsbehälter drehen und in den Mischbecher fließen kann, um Kaffeepulver aufzubrühen und anschließend in die Kaffeetasse zu fließen, und
die Antriebseinheit einen Drehring (701), der auf den Flüssigkeitsbehälter gestülpt ist, ein Lager (702), das zum Stützen des Drehrings auf den Drehring gestülpt ist, und einen Motor (703), der in dem Hohlraum des Stützarms bereitgestellt ist, umfasst, wobei der Drehring über einen Treibriemen (704) an einer Drehwelle des Motors befestigt ist.

2. Brühvorrichtung für eine Kaffeemaschine nach Anspruch 1, wobei mehrere erste Flüssigkeitsauslässe (501) an dem Flüssigkeitsbehälter an einer seitlich versetzten Position angeordnet sind.

3. Brühvorrichtung für eine Kaffeemaschine nach Anspruch 2, wobei der Flüssigkeitsbehälter von einem Einstellring (503) zum Einstellen der ersten zu verschließenden Flüssigkeitsauslässe umgeben ist.

4. Brühvorrichtung für eine Kaffeemaschine nach Anspruch 1, wobei an einer Unterseite des Mischbechers ein zweiter Flüssigkeitsauslass bereitgestellt ist.

5. Brühvorrichtung für eine Kaffeemaschine nach Anspruch 1, wobei zwischen dem Mischbecher und der Kaffeetasse ein Filtersieb bereitgestellt ist.

6. Brühvorrichtung für eine Kaffeemaschine nach Anspruch 1, wobei in dem Flüssigkeitsbehälter ein Thermometer (502) bereitgestellt ist.

7. Brühvorrichtung für eine Kaffeemaschine nach Anspruch 1, wobei die Kaffeetasse von einem hitzebeständigen Ring (201) umgeben ist.

8. Brühvorrichtung für eine Kaffeemaschine nach Anspruch 1, wobei in dem Hohlraum des Stützarms eine Batterie (304) bereitgestellt ist, um der Antriebseinheit Energie zuzuführen.

9. Brühvorrichtung für eine Kaffeemaschine nach Anspruch 8, wobei in einer Seitenwand des Stützarms ein USB-Anschluss bereitgestellt ist, um die Batterie zu laden.

## Revendications

1. Dispositif de brassage pour machine à café, comprenant une base (10) fournie pour supporter une tasse à café (20) et un bras de support (30) fourni sur une surface supérieure de la base et perpendiculaire à la base, dans lequel le bras de support est fourni avec une cavité, un manche (301) se prolongeant depuis une paroi latérale d'un sommet du bras de support est fourni pour fixer un récipient de liquide (50), et un cadre de support (303) se prolongeant depuis une paroi latérale d'un milieu du bras de support est fourni pour supporter une tasse de mélange (40) ;
**caractérisé en ce que** :
le bras de support est muni d'une unité d'entrainement (70) agencée en son sein pour entrainer la rotation du récipient de liquide de sorte que le liquide dans le récipient de liquide est capable d'entrer en rotation et de s'écouler dans la tasse de mélange pour brasser la poudre de café et ensuite de s'écouler dans la tasse à café, et
l'unité d'entrainement comprend un anneau de rotation (701) emmanché sur le récipient de liquide, un palier (702) emmanché sur l'anneau de rotation pour support l'anneau de rotation et un moteur (703) fourni dans la cavité du bras de support, l'anneau de rotation étant attaché à un arbre de rotation du moteur par l'intermédiaire d'une courroie de transmission (704).

2. Dispositif de brassage pour machine à café selon la revendication 1, dans lequel une pluralité de premières sorties de liquide (501) est fournie sur le récipient de liquide au niveau d'une position excentrée.

3. Dispositif de brassage pour machine à café selon la revendication 2, dans lequel le récipient de liquide est emmanché avec un anneau d'ajustement (503) pour ajuster les premières sorties de liquide en position fermée.

4. Dispositif de brassage pour machine à café selon la revendication 1, dans lequel une seconde sortie de liquide est fournie au fond de la tasse de mélange.

5. Dispositif de brassage pour machine à café selon la revendication 1, dans lequel un tamis de filtration est fourni entre la tasse de mélange et la tasse à café.

6. Dispositif de brassage pour machine à café selon la revendication 1, dans lequel un thermomètre (502) est fourni dans le récipient de liquide.

7. Dispositif de brassage pour machine à café selon la revendication 1, dans lequel la tasse à café est emmanchée avec un anneau résistant à la chaleur (201).

8. Dispositif de brassage pour machine à café selon la revendication 1, dans lequel une pile (304) est fournie dans la cavité du bras de support pour alimenter en énergie l'unité d'entrainement.

9. Dispositif de brassage pour machine à café selon la revendication 8, dans lequel une interface USB est fournie sur une paroi latérale du bras de support pour charger la pile.
